# FASCICULE DE BREVET EUROPEEN

(11) **EP 1 792 798 B1**
(45) Date de publication et mention de la délivrance du brevet: **02.07.2008**
(21) Numéro de dépôt: 06024461.3
(22) Date de dépôt: 24.11.2006
(51) Int. Cl.: B60T 17/06, B60T 11/22

(54) **Réservoir de liquide de frein et son système de fixation**
Bremsflussigkeitsbehälter und -befestigungssystem
Brake fluid reservoir, and its attachment system

(30) Priorité: 02.12.2005 FR 0512446
(43) Date de publication de la demande: 06.06.2007
(73) Titulaire: ROBERT BOSCH GMBH, 70442 Stuttgart (DE)
(72) Inventeur: Bourlon, Philippe, 77230 Dammartin en Goele (FR); Grech, Daniel, 60260 La Morlaye (FR)
(74) Mandataire: Hurwic, Aleksander Wiktor

(56) Documents cités:
- EP-A- 0 372 909
- EP-A- 1 190 923
- DE-A1- 10 217 682
- FR-A- 2 324 928
- US-A- 4 514 983
- US-A- 5 743 092

## Description

L'invention concerne un réservoir et un système de fixation de ce réservoir sur une pièce support. Elle est plus particulièrement applicable à un réservoir de liquide freins et à son système de fixation sur un maître cylindre de freins.

Dans un système de freinage d'un véhicule automobile, un réservoir de liquide de freins est fixé sur la partie supérieure d'un maître cylindre de freins pour constituer une réserve de liquide en vue de pallier toute diminution de volume du liquide dans le circuit hydraulique de freinage du véhicule. Le maître cylindre de freins est lui-même fixé sur un servomoteur d'assistance au freinage qui est commandé par la pédale de frein.

Il existe différents modes de fixation d'un réservoir sur un maître cylindre de freins. Notamment, certains réservoirs sont fixés à l'aide d'un ou plusieurs éléments de fixation, tels que goupilles ou boulons, qui traversent des pattes de fixation prévues dans la partie inférieure du réservoir et des pattes de fixation qui sont prévues sur la partie supérieure du maître cylindre de freins.

Le document EP 1190923 divulgue un dispositif comme décrit dans le préambule de la revendication 1.

Cependant, ces éléments de fixation doivent être immobilisés à l'aide, par exemple, d'écrous pour les boulons. Le montage et le démontage du réservoir demande donc un outillage et nécessite un certain temps.

L'invention concerne un système de fixation qui facilite le montage et le démontage du réservoir.

L'invention concerne donc un réservoir de liquide de frein comprenant au moins deux pattes latérales de fixation destinées à être placées de part et d'autre d'une patte centrale de fixation d'un dispositif support. Ces pattes latérales comportent deux trous colinéaires destinés à recevoir une goupille de fixation destinée elle-même à traverser une patte centrale de la pièce support. Selon l'invention, il est prévu que les pattes de fixation comportent au moins un dispositif d'immobilisation axiale de la goupille, et les trous des pattes latérales comportent des élargissements situés du côté des faces des pattes latérales qui sont destinées à être en contact avec la patte centrale de la pièce support. Ces élargissements sont destinés à emprisonner la goupille de fixation placée dans lesdits trous.

L'invention concerne également un dispositif de fixation appliquant le réservoir ainsi conçu. Il comporte un dispositif ressort s'appuyant d'une part contre une face inférieure du réservoir et destiné à s'appuyer contre une face supérieure de la pièce support de façon à écarter le réservoir de la pièce support selon un sens de déplacement déterminé. La goupille placée dans lesdits trous est alors destinée à avoir ses extrémités placées dans les élargissements.

La profondeur des élargissements mesurée selon l'axe des trous est telle que la somme des profondeurs des élargissements des deux pattes latérales et de la distance entre ces deux pattes latérales est supérieure à la longueur de la goupille.

On prévoit que chaque élargissement est situé au moins du côté opposé audit sens de déplacement par rapport à l'axe des trous.

Selon un mode de réalisation intéressant du système de l'invention, le dispositif ressort comporte une rondelle élastique placée entre le réservoir et la pièce support.

Pour permettre la réalisation de ce mode de réalisation, on peut prévoir que le réservoir comporte un bossage situé sous la face inférieure du réservoir et pénétrant dans un trou de la pièce support et en ce que la rondelle comporte un manchon placé autour du bossage, ledit manchon se terminant par une collerette élastique déformable qui est destinée à être en contact avec la face inférieure du réservoir.

L'invention est plus particulièrement applicable à la fixation d'un réservoir de liquide de frein sur un maître cylindre de freins. La pièce support est alors un maître cylindre de freins comportant, sur sa partie supérieure, une patte centrale de fixation située selon l'axe longitudinal du maître cylindre.

Dans une telle application, on peut prévoir que ladite rondelle est placée autour d'une sortie du réservoir et autour d'un accès du maître cylindre de freins.

Les différents objets et caractéristiques de l'invention apparaîtront plus clairement dans la description qui va suivre et dans les figures annexées qui représentent:
- les figures 1a à 1c, un exemple de réalisation simplifié d'un système selon l'invention,
- les figures 2a à 2c, un exemple de réalisation détaillée d'un système de fixation selon l'invention,
- les figures 3a et 3b, un exemple de dispositif ressort permettant de rendre opérationnel le système des figures 2a à 2c,

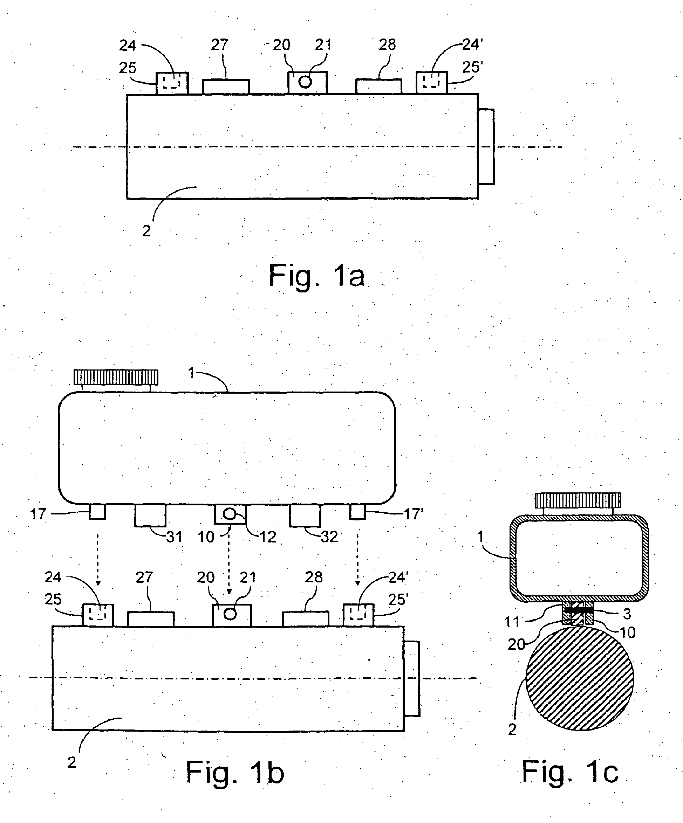

En se reportant aux figures 1a à 1c, on va tout d'abord décrire un exemple de réalisation simplifié selon l'invention.

La figure 1a représente un maître cylindre de freins permettant de mettre en oeuvre l'invention. Ce maître cylindre 2 comporte deux accès 27 et 28 permettant de communiquer avec l'intérieur du maître cylindre et d'injecter du liquide freins en vue de remplir le circuit hydraulique de freinage du véhicule. Une patte de fixation 20 comportant un trou 21 est prévue à la partie supérieure du maître cylindre. Il est également prévu des bossages 25-25' comportant des trous borgnes 24-24' dont l'utilité sera expliqué ci-après.

La figure 1b représente à sa partie inférieure un maître cylindre de freins 2 tel que celui de la figure 1a et à sa partie supérieure, un réservoir de liquide de frein 1 destiné à être fixé sur le maître cylindre 2.

Le réservoir 1 comporte des sorties 31 et 32 destinées à être emboîtées dans les accès 27 et 28 du maître cylindre de freins de façon à faire communiquer l'intérieur du réservoir avec l'intérieur du maître cylindre. Deux pattes de fixation 10 et 11 prévues à la partie inférieure du réservoir sont destinées à être placées de part et d'autre de la pattes centrale de fixation 20 du maître cylindre comme cela est représenté sur la figure 1c. Deux bossages 17 et 17' sont prévus également à la partie inférieure du réservoir et sont destinés à s'emboîter dans les trous 24-24' des bossages 25-25' du maître cylindre.

Comme cela est indiqué par les flèches en pointillés sur la figure 1b, le réservoir 1 est placé sur le maître cylindre de freins 2 de façon à obtenir l'assemblage de la figure 1c.

Les trous, tel que le trou 12, des pattes du réservoir sont mis en correspondance du trou 21 de la patte 20 du maître cylindre et une goupille est enfichée dans ces trous (voir figure 1c).

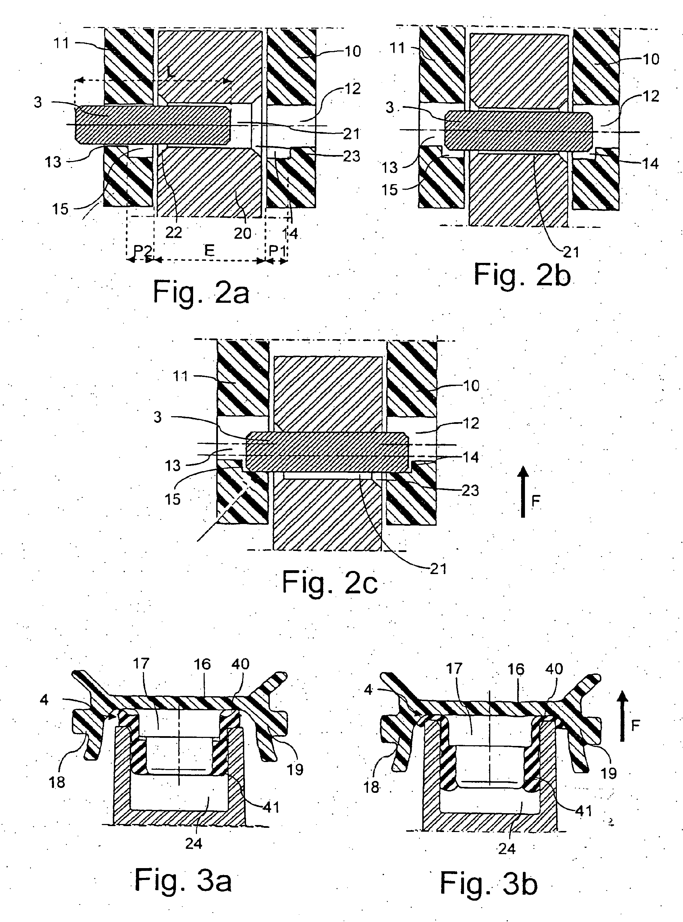

Les figures 2a à 2c représentent un mode fixation d'un réservoir sur un maître cylindre de freins à l'aide d'une goupille.

Sur ces figures on retrouve la patte centrale 20 du maître cylindre et les pattes latérales 10 et 11 du réservoir disposées de part et d'autre de la patte 20. Les trous 12 et 13 des pattes 10 et 11 et 21 de la patte 20 sont mis sensiblement en correspondance.

Les trous 12 et 13 comporte des élargissements 14 et 15 situés du côté des faces des pattes 10 et 11 qui voisinent voire sont en contact avec la patte centrale 20.

Sur la figure 2a, une goupille 3 est engagée dans les trous 13 et 21.

Sur la figure 2b, la goupille est mise en place au centre du dispositif.

Sur la figure 2c, les pattes latérales 10 et 11 (c'est-à-dire le réservoir) ont été déplacées vers le haut selon le sens de la flèche F. la goupille se trouve alors placée dans les élargissements 14 et 15 des trous des pattes 10 et 11, et la goupille ne peut plus sortir des trous dans laquelle elle a été placée.

La longueur L de la goupille est inférieure à la somme des profondeurs P1 et P2 des élargissements et de la distance E séparant les deux pattes 10 et 11.

On notera que, pour faciliter l'insertion de la goupille dans le trou 21 de la patte 20, le trou 20 a ses extrémités fraisée, à 45° par exemple, pour que l'on puisse mettre en place la goupille même si le trou 21 n'est pas rigoureusement dans l'alignement des trous 12 et 13.

Les figures 3a et 3b représentent un système permettant de pousser le réservoir 1 selon le sens de la flèche F. Les bossages 17 et 17' (figure 1b) sont munies de manchons en matériau élastique. Ainsi sur la figure 3a, un joint 4 de forme générale cylindrique possédant un manchon 40 qui est placé autour du bossage 17. Ce manchon possède à sa partie supérieure une collerette élastique 40.

Lors du montage du réservoir sur le maître cylindre de freins, les bossages tel que 17 sont insérés dans les trous tel que 24 du maître cylindre. On a donc la situation illustrée par la figure 3a.

La collerette supérieure 40 du manchon 4 possède à sa partie supérieure, un diamètre plus grand de telle façon qu'en appuyant sur le réservoir selon le sens inverse de la flèche F, la partie supérieure de la collerette est écrasée par la face inférieure du réservoir et s'écarte de l'axe du bossage 17. Cette situation est représentée par la figure 3b. Cette partie supérieure de la collerette 40 offre de la résistance à l'effort exercé du haut vers le bas sur le réservoir. Dans la situation représentée par la figure 3b, la goupille 3 peut être insérée dans les trous 12, 21 et 13 comme cela a été décrit précédemment. Au relâchement de l'effort exercer sur le réservoir, la collerette 40, en raison de son élasticité, repousse le réservoir vers le haut dans le sens de la flèche F et la goupille se trouve emprisonnée dans les élargissement 14 et 15 selon la situation illustrée par la figure 2c.

Selon une variante de réalisation non représentée sur les figures, les manchons, tel que le manchon 4, peuvent être montés dans les accès 27 et 28 du maître cylindre. Les sorties 31 et 32 du réservoir sont destinées à être placées dans ces manchons. Comme précédemment, lors du montage du réservoir sur le maître cylindre, la partie supérieure de la collerette 40 de chaque manchon est écrasée par la face inférieure du réservoir et s'écarte de l'axe de la sortie 31, 32 correspondante.

La partie supérieure de la collerette 40 offre de la résistance à l'effort exercé du haut vers le bas sur le réservoir et lors du relâchement de l'effort exercer sur le réservoir, la collerette 40, en raison de son élasticité, repousse le réservoir vers le haut dans le sens de la flèche F et une goupille placée dans les trous 12, 13, 21 se trouve emprisonnée dans les élargissement 14 et 15.

Dans cette variante de réalisation, les bossages 17 et 17' du réservoir et les trous borgnes 24 et 24' prévus dans le maître cylindre et destinés à recevoir les bossages 17 et 17' ne sont plus nécessaires.

## Revendications

1. Réservoir de liquide de frein comprenant au moins deux pattes latérales de fixation (10, 11) destinées à être placées de part et d'autre d'une patte centrale de fixation (20) d'un dispositif support, lesdites pattes comportant deux trous colinéaires (12, 13) destinés à recevoir une goupille de fixation (3) destinée elle-même à traverser les pattes latérales (10, 11) et la patte centrale (20) du dispositif support, lesdites pattes comportant au moins un dispositif d'immobilisation axiale de la goupille de fixation (3),**caractérisé en ce que** les trous (12, 13) des pattes latérales (10, 11) comportent des élargissements (14, 15) situés du côté des faces des pattes latérales qui sont destinées à être en contact avec la patte centrale du dispositif support, lesdits élargissements étant destinés à emprisonner une goupille de fixation placée dans lesdits trous.

2. Dispositif de fixation appliquant le réservoir selon la revendication 1, **caractérisé en ce qu'**il comporte un dispositif ressort s'appuyant d'une part contre une face inférieure du réservoir et destiné à s'appuyer contre une face supérieure du dispositif support, de façon à écarter le réservoir du maître cylindre de freins selon un sens de déplacement (F) et **en ce que** la goupille (3) placée dans lesdits trous (12, 13) est destinée à avoir ses extrémités (30, 31) placée dans les élargissements (14, 15).

3. Dispositif de fixation selon la revendication 2, **caractérisé en ce que** la profondeur (P1, P2) des élargissements mesurée selon l'axe des trous (12, 13) est telle que la somme des élargissements des deux pattes latérales et de la distance entre ces deux pattes latérales est supérieure à la longueur (L) de la goupille (3).

4. Dispositif de fixation selon la revendication 3, **caractérisé en ce que** chaque élargissement est situé au moins du côté opposé au sens de déplacement (F) par rapport à l'axe des trous (12, 13).

5. Dispositif de fixation selon la revendication 2, **caractérisé en ce que** le dispositif ressort comporte une rondelle élastique (4) placée entre le réservoir et la pièce support.

6. Dispositif de fixation selon la revendication 2, **caractérisé en ce que** le réservoir comporte un bossage (17) situé sous la face inférieure (18) du réservoir et pénétrant dans un trou (24) de la pièce support et **en ce que** la rondelle (4) comporte un manchon (41) placé autour du bossage, ledit manchon se terminant par une collerette élastique déformable située en contact avec la face inférieur du réservoir.

7. Application du dispositif de fixation selon l'une quelconque des revendications précédentes à la fixation d'un réservoir de liquide de frein sur un maître cylindre de freins **caractérisée en ce que** la pièce support est un maître cylindre de freins comportant, sur sa partie supérieure, une patte centrale de fixation située selon l'axe longitudinal du maître cylindre.

## Claims

1. Brake fluid reservoir comprising at least two lateral mounting lugs (10, 11) designed to be placed either side of a central mounting lug (20) of a support device, the said lugs including two collinear holes (12, 13) designed to receive a mounting pin (3) itself designed to pass through the lateral lugs (10, 11) and the central lug (20) of the support device, the said lugs including at least one device for the axial immobilization of the mounting pin (3), **characterized in that** the holes (12, 13) in the lateral lugs (10, 11) include wider sections (14, 15) located on the side of the faces of the lateral lugs which are designed to be in contact with the central lug of the support device, the said wider sections being designed to confine a mounting pin placed in the said holes.

2. Mounting device attaching the reservoir according to Claim 1, **characterized in that** it includes a spring device pressing both on a lower face of the reservoir and designed to press on an upper face of the support device, so as to move the reservoir away from the brake master cylinder in a direction of movement (F) and **in that** the pin (3) placed in the said holes (12, 13) is designed to have its ends (30, 31) placed inside the wider sections (14, 15).

3. Mounting device according to Claim 2, **characterized in that** the depth (P1, P2) of the wider sections measured along the axis of the holes (12, 13) is such that the sum of the wider sections in the two lateral lugs plus the distance between these two lateral lugs is greater than the length (L) of the pin (3).

4. Mounting device according to Claim 3, **characterized in that** each wider section is located at least on the side opposite to the direction of movement (F) in relation to the axis of the holes (12, 13).

5. Mounting device according to Claim 2, **characterized in that** the spring device includes a spring washer (4) placed between the reservoir and the support part.

6. Mounting device according to Claim 2, **characterized in that** the reservoir includes a stud (17) located under the lower face (18) of the reservoir and going into a hole (24) in the support part and **in that** the washer (4) includes a sleeve (41) placed around the stud, the said sleeve ending in a deformable elastic flange located in contact with the lower face of the reservoir.

7. Application of the mounting device according to any one of the preceding claims to the mounting of a brake fluid reservoir on a brake master cylinder, **characterized in that** the support part is a brake master cylinder including, on its upper portion, a central mounting lug located on the longitudinal axis of the master cylinder.

## Patentansprüche

1. Bremsflüssigkeitsbehälter mit mindestens zwei seitlichen Befestigungslaschen (10, 11), die dazu vorgesehen sind, auf der einen und anderen Seite einer mittleren Befestigungslasche (20) einer Trägervorrichtung angeordnet zu sein, wobei die Laschen zwei kolineare Löcher (12, 13) aufweisen, die dazu vorgesehen sind, einen Befestigungsstift (3) aufzunehmen, der selbst dazu vorgesehen ist, durch die seitlichen Laschen (10, 11) und die mittlere Lasche (20) der Trägervorrichtung hindurch zu gehen, wobei die Laschen mindestens eine Vorrichtung zum axialen Festlegen des Befestigungsstifts (3) aufweisen, **dadurch gekennzeichnet, dass** die Löcher (12, 13) der seitlichen Laschen (10, 11) Aufweitungen (14, 15) aufweisen, die sich auf der Seite der Flächen der seitlichen Laschen befinden, die dazu vorgesehen sind, mit der mittleren Lasche der Trägervorrichtung in Kontakt zu stehen, wobei die Aufweitungen dazu vorgesehen sind, einen in den Löchern eingesetzten Befestigungsstift einzuschließen.

2. Befestigungsvorrichtung, die den Behälter nach Anspruch 1 anwendet, **dadurch gekennzeichnet, dass** sie eine Federeinrichtung aufweist, die sich einerseits gegen eine Unterseite des Behälters abstützt und dazu vorgesehen ist, sich gegen eine Oberseite der Trägervorrichtung abzustützen, damit der Behälter vom Hauptbremszylinder gemäß einer Verschieberichtung (F) beabstandet ist, und dass der in den Löchern (12, 13) eingesetzte Stift (3) dazu vorgesehen ist, mit seinen Enden (30, 31) in den Aufweitungen (14, 15) eingesetzt zu sein.

3. Befestigungsvorrichtung nach Anspruch 2, **dadurch gekennzeichnet, dass** die Tiefe (P1, P2) der Aufweitungen, entlang der Achse der Löcher (12, 13) gemessen, so bemessen ist, dass die Summe aus den Aufweitungen der beiden seitlichen Laschen und dem Abstand zwischen diesen beiden seitlichen Aufweitungen größer ist als die Länge (L) des Stifts (3).

4. Befestigungsvorrichtung nach Anspruch 3, **dadurch gekennzeichnet, dass** jede Aufweitung mindestens auf der der Verschieberichtung (F) entgegengesetzten Seite bezüglich der Achse der Löcher (12, 13) liegt.

5. Befestigungsvorrichtung nach Anspruch 2, **dadurch gekennzeichnet, dass** die Federeinrichtung eine zwischen dem Behälter und dem Trägerteil angeordnete Federscheibe (4) aufweist.

6. Befestigungsvorrichtung nach Anspruch 2, **dadurch gekennzeichnet, dass** der Behälter einen Höcker (17) aufweist, der unter der Unterseite (18) des Behälters angeordnet ist und in ein Loch (24) des Trägerteils eindringt, und dass die Federscheibe (4) eine Hülse (41) aufweist, die um den Höcker herum angeordnet ist, wobei die Hülse mit einem verformbaren elastischen Kragen endet, der sich mit der Unterseite des Behälters in Kontakt befindet.

7. Anwendung der Befestigungsvorrichtung nach einem der vorhergehenden Ansprüche auf die Befestigung eines Bremsflüssigkeitsbehälters an einem Hauptbremszylinder, **dadurch gekennzeichnet, dass** der Trägerteil ein Hauptbremszylinder ist, der an seinem oberen Teil eine mittlere Befestigungslasche aufweist, die entlang der Längsachse des Hauptzylinders angeordnet ist.
